# EUROPEAN PATENT SPECIFICATION

(11) **EP 4 331 529 B1**
(45) Date of publication and mention of the grant of the patent: **01.10.2025**
(21) Application number: 22794286.9
(22) Date of filing: 18.02.2022
(51) Int. Cl.: A61C 7/00, A61C 7/08

(54) **SHELL-SHAPED DENTAL INSTRUMENT AND SHELL-SHAPED DENTAL APPLIANCE SET**
SCHALENFÖRMIGES DENTALINSTRUMENT UND SCHALENFÖRMIGES DENTALGERÄTESET
INSTRUMENT DENTAIRE EN FORME DE COQUILLE ET ENSEMBLE D'APPAREILS DENTAIRES EN FORME DE COQUILLE

(30) Priority: 30.04.2021 CN 202110484369; 30.04.2021 CN 202120929568 U
(43) Date of publication of application: 06.03.2024
(73) Proprietor: Shanghai Smartee Denti-Technology Co., Ltd., Shanghai 201210 (CN)
(72) Inventor: ZHUANG, Huimin, Shanghai 201210 (CN); WANG, Xingxing, Shanghai 201210 (CN); WU, Gang, Shanghai 201210 (CN); YAO, Junfeng, Shanghai 201210 (CN)
(74) Representative: Balder IP Law, S.L.
(86) International application number: PCT/CN2022/076901
(87) International publication number: WO 2022/227806

(56) References cited:
- WO-A1-2015/132649
- CN-A- 109 893 263
- CN-A- 110 025 388
- CN-A- 112 057 187
- CN-U- 211 094 856
- CN-U- 211 094 856
- CN-U- 215 019 356
- CN-U- 215 739 547
- US-A1- 2002 192 617
- US-A1- 2003 207 224
- US-A1- 2018 256 295
- US-A1- 2019 029 776

## Description

### TECHNICAL FIELD

The various embodiments described in this document relate in general to the technical field of dental orthodontics, more specifically relates to the technical field of brackets-free invisible orthodontics, and in particular to a shell-shaped dental instrument and a shell-shaped dental appliance set.

### BACKGROUND

Compared with traditional orthodontic diagnosis and treatment technology, brackets-free invisible orthodontic technology is popular with a lot of people because the brackets-free invisible orthodontic is comfortable in wearing and beautiful in appearance. However, existing invisible orthodontics has some limitations for early orthodontics of primary dentition, mixed dentition, and permanent dentition. The main reason is that the patients are young. In addition to the problem of alignment of teeth, maxilla and mandible in all dimensions of length, width and height of the vast majority of patients are still growing. In addition, differential growth of the mandible, position determination of temporomandibular joint related to craniofacial neuromuscular function and occlusal relationship, and the development of facial soft tissue and formation of the coordinated and stable functional relationship between the facial soft tissue and jaw may also affect the early orthodontics. That is, in addition to alignment of the teeth, functional correction is also required during treatment.

In traditional functional appliances, steel wires need to be manually bent as brackets, then coated with self-cured plastic cement, and polished according to the oral structure of patients, which are time-consuming and laborious, and high in the manufacturing cost. Due to the large volume of the functional appliance, pronunciation, chewing, and swallowing functions may be affected after the functional appliance is initially worn, and therefore, it takes a long time for patients to adapt to the functional appliances. In addition, the functional appliance may also affect patient's oral saliva secretion and flow during wearing, thus affecting the self-cleaning and remineralization of teeth, changing the oral microecology of patients, and affecting oral health.

At present, in clinical practice, aiming at the problem that developing dentition is easily affected by abnormal perioral muscle function, in addition to wearing brackets-free invisible appliances, patients also need to use functional appliances such as buccal screen and lip bumper to adjust perioral muscle function. In related technologies, patients generally need to wear brackets-free invisible appliances in daytime to align teeth, and to wear functional appliances at night to promote alveolar bone reconstruction and maxillofacial structure reconstruction. However, in general, patients need to wear brackets-free invisible appliances for at least 20 hours every day to align the teeth, and need to wear functional appliances for at least 10 hours every day to achieve the therapeutic effect. Therefore, in the related technologies, teeth alignment and muscle function correction are not carried out synchronously, which may inevitably lead to a longer whole treatment cycle and an increase in diagnosis and treatment times, thus increasing the therapeutic cost of patients.

Therefore, the present disclosure provides a solution to solve the above problems.

US2002/192617A1 relates to a traditional orthodontic treatment which often involves the use of basic repositioning devices, such as braces, and the use of supplementary devices, components or accessories to achieve desired end results. Such components may be mounted on fixed, non-removable devices or they may be part of a removable appliance typically worn prior to the application of the fixed devices. As with traditional treatment, it may be desired to utilize similar components when repositioning teeth with removable elastic repositioning appliances. Due to the nature of elastic appliances, such components may take a variety of forms ranging from readily available traditional accessories to specially created devices. Thus, traditional components may be mounted on or embedded in an elastic appliance, or the appliance may be formed to provide similar components. Likewise, the appliance may be modified to provide additional features for specific orthodontic treatments.

### SUMMARY

The technical problem solved by the disclosure is to overcome the defects existing in the related technologies, and to provide a novel shell-shaped dental instrument with muscle function correction and a shell-shaped dental appliance set. The invention is set out in the appended set of claims.

In order to achieve the above purpose, technical schemes adopted in this disclosure are as follows.

A shell-shaped dental instrument is provided and includes a shell-shaped body having a plurality of tooth receiving cavities. The shell-shaped body includes a screen block, and the screen block includes a blocking portion disposed on at least one of a labial side and a buccal side of the shell-shaped body and being protruded in a direction away from teeth, and a contact portion connected with the blocking portion, where the blocking portion is configured to be in contact with at least one of labial muscle and buccal muscle during wearing of the shell-shaped dental instrument, such that force exerted by at least one of the labial muscle and the buccal muscle on the blocking portion is at least partially transmitted to gingiva through the contact portion. The contact portion transmits part of the force exerted by at least one of labial muscle and buccal muscle to the gingiva, thereby increasing the retention force of the shell-shaped dental instrument on the gingiva, and solving the problem of the shell-shaped dental instrument being prone to detachment from the teeth due to the small size of the patient's dentition.

In some embodiments, each of at least one of the plurality of tooth receiving cavities has a geometric structure, and the geometric structure is configured to allow a respective received tooth to be moved from a corresponding first position to a corresponding second position.

According to the claimed invention, the contact portion has a structure configured to be in stable contact with the gingiva during the wearing.

Furthermore, a side surface of the contact portion close to the gingiva has a shape substantially consistent with a shape of the gingiva. Therefore, the contact portion is more closely attached to the gingiva.

In some embodiments, the blocking portion is protruded from at least one of a labial side and a buccal side of at least one tooth receiving cavity of the plurality of tooth receiving cavities from at least one of the labial side and the buccal side in the direction away from the teeth.

In some embodiments, an inner surface of the blocking portion is at least partially not in contact with an outer surface of at least one tooth adjacent to the inner surface of the blocking portion during the wearing.

In some embodiments, the blocking portion is protruded in the direction away from the teeth and disposed on gingiva corresponding to at least one of the labial side and the buccal side of the shell-shaped body.

In some embodiments, the blocking portion and the contact portion are integrally formed or separately formed.

In some embodiments, the blocking portion is a bubble structure protruding in the direction away from the teeth, in response to the blocking portion and the contact portion being integrally formed.

In some embodiments, the blocking portion has a cross section in a shape of one of or a combination of two or more of an ellipse, a water droplet, and a polygon in a direction of a length axis of a corresponding tooth.

In some embodiments, there is a filler disposed inside the blocking portion for enhancing strength of the blocking portion.

In some embodiments, the blocking portion is fixed on the shell-shaped body through any of bonding, riveting, and welding, in response to the blocking portion and the contact portion being separately formed.

In some embodiments, the blocking portion includes a material same as or different from a material of the contact portion, in response to the blocking portion and the contact portion being separately formed.

In some embodiments, the blocking portion has a thickness greater than a thickness of the contact portion, in response to the material of the blocking portion being the same as the material of the contact portion.

In some embodiments, the material of the blocking portion has elastic modulus greater than that of the material of the contact portion, in response to the material of the blocking portion being different from the material of the contact portion.

In some embodiments, the blocking portion is a solid protrusion.

In some embodiments, a maximum height of the blocking portion being protruded in the direction away from the teeth is in a range of 3mm to 8mm.

In some embodiments, the blocking portion has a length equal to a total width of 1 to 6 teeth in a dental arch direction.

In some embodiments, the blocking portion has a length equal to a total width of an entire dental arch in a dental arch direction.

In some embodiments, each of at least one surface of a proximal tooth surface, a distal tooth surface, a mesial surface, and a distal surface of the blocking portion is provided with at least one reinforcing member.

In some embodiments, the at least one reinforcing member and the blocking portion are integrally formed, and each of the at least one reinforcing member is a bubble structure of which a surface curvature greater than a surface curvature of the blocking portion.

In some embodiments, the at least one reinforcing member and the blocking portion are separately formed, and the at least one reinforcing member is fixed to the blocking portion.

In some embodiments, the at least one reinforcing member is disposed on the blocking portion in a gingival-jaw direction or in a mesial-distal direction.

In some embodiments, the shell-shaped body further includes an arch expanding device cooperated with the blocking portion.

In some embodiments, the arch expanding device and the shell-shaped body are integrally formed. One end of both ends of the arch expanding device is connected to a gingival margin or an adjacent gingival margin of a lingual surface in a posterior tooth region on one side of the shell-shaped body, and another end of the both ends of the arch expanding device is connected to a gingival margin or an adjacent gingival margin of a lingual surface in a posterior tooth region on another side of the shell-shaped body.

In some embodiments, the arch expanding device and the shell-shaped body are separately formed, and the arch expanding device is detachably connected with the shell-shaped body.

In some embodiments, a shell-shaped dental appliance set is provided and includes a first shell-shaped body and a second shell-shaped body cooperated with the second shell-shaped body. The first shell-shaped body is the shell-shaped dental instrument described in any of above embodiments, and the second shell-shaped body has a plurality of tooth receiving cavities.

In some embodiments, the second shell-shaped body is the shell-shaped dental appliance described in any of above embodiments.

In some embodiments, in response to the screen block provided on the first shell-shaped body being aligned with the screen block provided on the second shell-shaped body in a direction of a length axis of the teeth, each of a length of the blocking portion on the first shell-shaped body and a length of the blocking portion on the second shell-shaped body in the direction of the length axis of the teeth does not exceed beyond a jaw plane.

The shell-shaped dental instrument and the shell-shaped dental appliance set provided by the present disclosure can have at least one of the following beneficial effects.
1) The screen block of the shell-shaped dental instrument in the present disclosure is provided with the blocking portion and the contact portion, where the blocking portion blocks the contact between the labial muscle and/or buccal muscle, and a corresponding dentition, thereby reducing the inhibition of the buccal muscle on the lateral growth of the teeth and the inhibition of the labial muscle on the anterior growth of the teeth and stimulating the transverse or longitudinal development of the teeth. The force exerted by the labial muscle and/or the buccal muscle on the blocking portion is at least partially transmitted to the corresponding gingiva through the contact portion, thus enhancing the retention force of the shell-shaped dental instrument to the gingiva and solving the problem that the shell-shaped dental instrument is easy to fall off from the tooth when the tooth of the patient is small.
2) Compared with the traditional functional appliance, the shell-shaped dental appliance of the present disclosure is provided with the screen block on the basis of the existing shell-shaped dental appliance, and the shell-shaped dental appliance and the screen block are cooperated with each other, so that the shell-shaped dental appliance has the function of adjusting the oral vestibule region and the oral perioral tissue while aligning the dentition, thus improving the correction comfort of the patients and shortening the correction cycle.
3) The shell-shaped dental instrument is further provided with the arch expanding device which is cooperated with the screen block. The deformation of the arch expanding device induces the deposition of the suture bone in the upper jaw and palate, and the buccal lateral expansion, and the teeth in the posterior tooth region move to the buccal side under the action of the arch expanding device. The screen block on the buccal side of the shell-shaped dental instrument provides sufficient space for the buccal movement of the teeth by utilizing a protruding structure in the direction away from the teeth, thus avoiding the resistance of buccal muscles to the dental arch during arch expansion.
4) In the shell-shaped dental appliance set, both the maxilla and mandible (upper and lower jaws) wear shell-shaped dental instruments, where at least one shell-shaped dental instrument is provided with the screen block, so that dentitions corresponding to the upper and lower jaws can grow normally in the three directions of length, width, and height to the maximum extent while being aligned, thus reducing the dental correction steps and shortening the correction cycle.

### BRIEF DESCRIPTION OF THE DRAWINGS

The above characteristics, technical features, advantages, and embodiments will be further explained below in a clear manner with reference to the accompanying drawings in which preferred embodiments are illustrated.
FIG. 1 is a schematic diagram of a shell-shaped dental instrument according to an embodiment of the present disclosure.
FIG. 2 is a schematic top view of the shell-shaped dental instrument of FIG. 1.
FIG. 3 is a schematic diagram of a shell-shaped dental instrument according to another embodiment of the present disclosure.
FIG. 4 is a schematic diagram of a shell-shaped dental instrument according to yet another embodiment of the present disclosure.
FIG. 5 is a schematic cross-sectional view of the shell-shaped dental instrument in FIG. 4 in direction A-A.
FIG. 6 is a schematic diagram of a shell-shaped dental instrument according to still yet another embodiment of the present disclosure.
FIG. 7 is a schematic diagram of a shell-shaped dental instrument according to still yet another embodiment of the present disclosure.
FIG. 8 is a schematic diagram of a shell-shaped dental instrument according to still yet another embodiment of the present disclosure.
FIG. 9 is a schematic diagram of a shell-shaped dental instrument according to still yet another embodiment of the present disclosure.
FIG. 10 is a schematic diagram of a shell-shaped dental instrument according to still yet another embodiment of the present disclosure.
FIG. 11 is an enlarged schematic view of region I in FIG. 10.
FIG. 12 is a schematic diagram of a shell-shaped dental instrument according to still yet another embodiment of the present disclosure.

### DETAILED DESCRIPTION OF THE EMBODIMENTS

In order to more clearly explain the embodiments of the present disclosure or the technical solution in the related technologies, the specific embodiments of the present disclosure will be described below with reference to the accompanying drawings. It will be apparent that the drawings described below are only some embodiments of the present disclosure, and other drawings and other embodiments may be obtained from these drawings without creative effort by those of ordinary skill in the art.

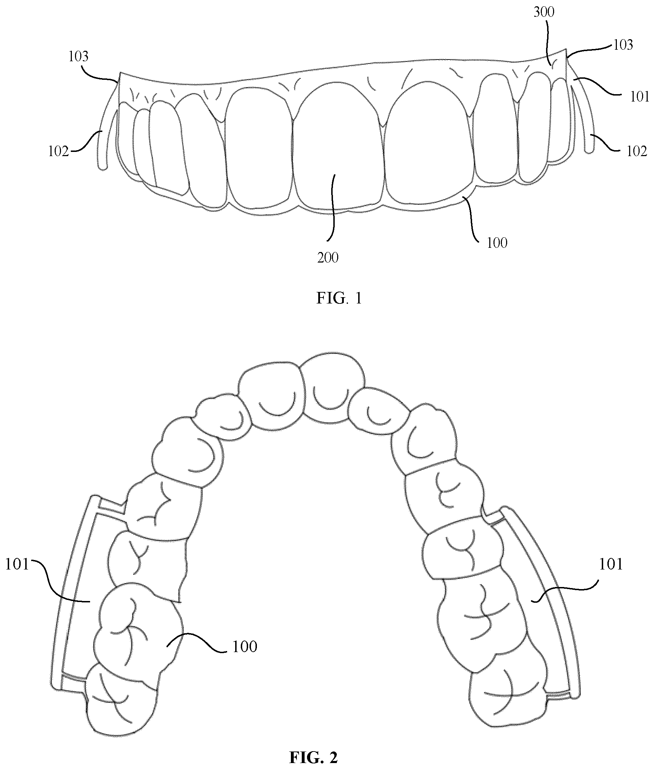

Referring to FIGS. 1 and 2, in some embodiments, the present disclosure provides a shell-shaped dental instrument. The shell-shaped dental instrument includes a shell-shaped body 100 having a plurality of tooth receiving cavities. Each of the plurality of tooth receiving cavities wraps a corresponding entire tooth 200 from dental crown to gingival margin. The shell-shaped body 100 further includes a screen block 101. The screen block 101 includes a contact portion 103 integrally formed with the shell-shaped body 100 and at least one blocking portion 102. Each respective blocking portion 102 is protruded from a labial side, a buccal side, or a labial-buccal side of the shell-shaped body 100 in a direction away from a corresponding tooth, to support labial-buccal mucosa to block contact between labial muscle, buccal muscle, or labial-buccal muscle and corresponding teeth, thereby reducing the inhibitory effect of the labial muscle, the buccal muscle, or the labial-buccal muscle on tooth growth and stimulating the transverse or longitudinal development of the corresponding tooth. The contact portion 103 is connected with the at least one blocking portion 102. During wearing of shell-shaped dental instrument, the contact portion 103 is in contact with part of gingiva 300 where the screen block 101 is located, and the contact portion 103 has a structure configured to be in stable contact with the part of the gingiva 300. Specifically, a side of the contact portion 103 close to the gingival (i.e., a proximal gingival surface of the contact portion 103) may be a curved surface structure, a planar structure, or a structure with protrusions. In one example, the proximal gingival surface of the contact portion 103 is a curved surface having a shape that basically coincides with a shape of the part of the gingiva 300. Therefore, the contact portion 103 can be fully fitted with and cover the part of the gingiva 300, which may enhance the control of the shell-shaped dental instrument to the part of the gingiva 300, and avoid that the shell-shaped dental instrument is easy to fall off the teeth due to the small teeth of patients, such as the deciduous teeth of children or the early mixed dentition of teenagers. Specifically, during wearing of the shell-shaped dental instrument, the at least one blocking portion 102 blocks force exerted by the labial muscle, the buccal muscle, or the labial-buccal muscle to inhibit the growth and development of the teeth. Since the at least one blocking portion 102 is connected with the contact portion 103, the at least one blocking portion 102 may transmit part of the pressure from the labial muscle, the buccal muscle, or the labial-buccal muscle to the part of the gingiva 300 in contact with the contact portion 103, thereby enhancing the control of the shell-shaped dental instrument to the gingiva 300 during wearing, so that the shell-shaped dental instrument is not easy to fall off from the teeth. In addition, the plurality of tooth receiving cavities can be used for aligning the teeth. Specifically, each of at least one of the plurality of tooth receiving cavities has a geometric structure, and the geometric structure is configured to allow a respective received tooth to be moved from a corresponding first position to a corresponding second position, where the corresponding first position can be an initial position of the respective tooth in any orthodontic step, and the corresponding second position is a target position of the respective tooth in the orthodontic step. It could be understood that the tooth receiving cavities may not have the function of aligning the teeth.

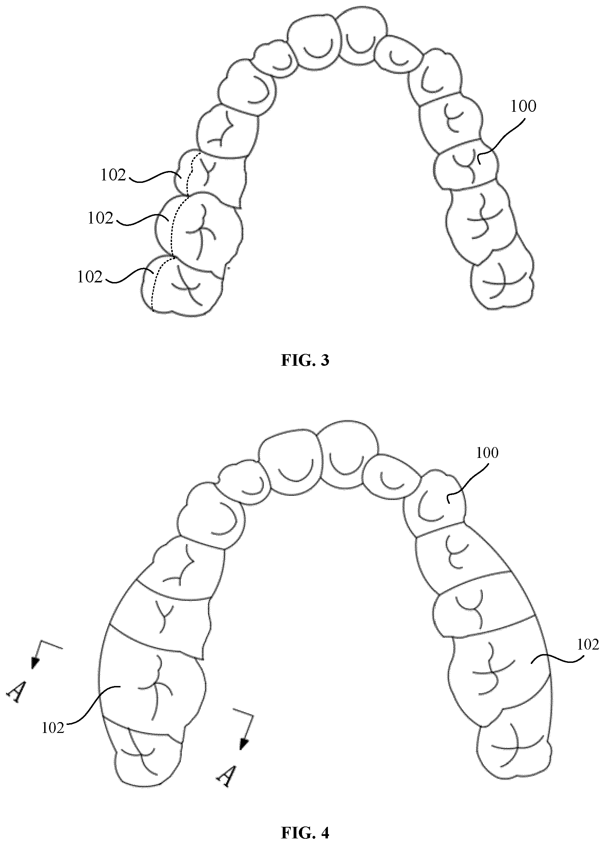

In some embodiments, as shown with reference to FIGS. 3 to 5, the blocking portion 102 is protruded from at least one of a labial side and a buccal side of at least one tooth receiving cavity of the plurality of tooth receiving cavities in the direction away from the corresponding tooth. In one example, the blocking portion 102 is protruded from the labial side or the buccal side of the at least one of the plurality of tooth receiving cavities in the direction away from the teeth, and the blocking portion 102 is integrally formed with the shell-shaped body 100. That is, the screen block is integrally formed with the shell-shaped body. If the blocking portion 102 is obtained by being protruded from one or more tooth receiving cavities in the direction away from the corresponding tooth, the blocking portion 102 is protruded from either side of two buccal sides or protruded from both the two buccal sides in the direction away from the corresponding tooth according to different treatment schemes. As illustrated in the shell-shaped dental instrument in FIG. 3, each respective blocking portion 102 is individually protruded from a corresponding tooth receiving cavity of the at least one tooth receiving cavity in the direction away from the corresponding tooth (a dashed line in the figure indicates a shape when nothing is protruded from the tooth receiving cavities in the direction away from the corresponding tooth). After the patient wears the shell-shaped dental instrument, an inner surface of each respective blocking portion 102 is not in contact with an outer surface of a corresponding tooth adjacent to the inner surface of the respective blocking portion 102, thus preventing the blocking portion 102 from exerting an undesired force on the corresponding tooth. Each two adjacent blocking portions 102 have a barrier therebetween to enhance the strength of the buccal side of the respective blocking portion 102, and the respective blocking portion 102 is not easily deformed after being worn. As illustrated in the shell-shaped dental instrument in FIG. 4, the blocking portion 102 is simultaneously protruded from one or more tooth receiving cavities in the direction away from the corresponding tooth. Similarly, after the patient wears the shell-shaped dental instrument, the inner surface of the blocking portion 102 is not in contact with an outer surface of the at least one tooth adjacent to the inner surface of the blocking portion 102, thereby eliminating the force exerted by the blocking portion 102 on the at least one tooth as much as possible.

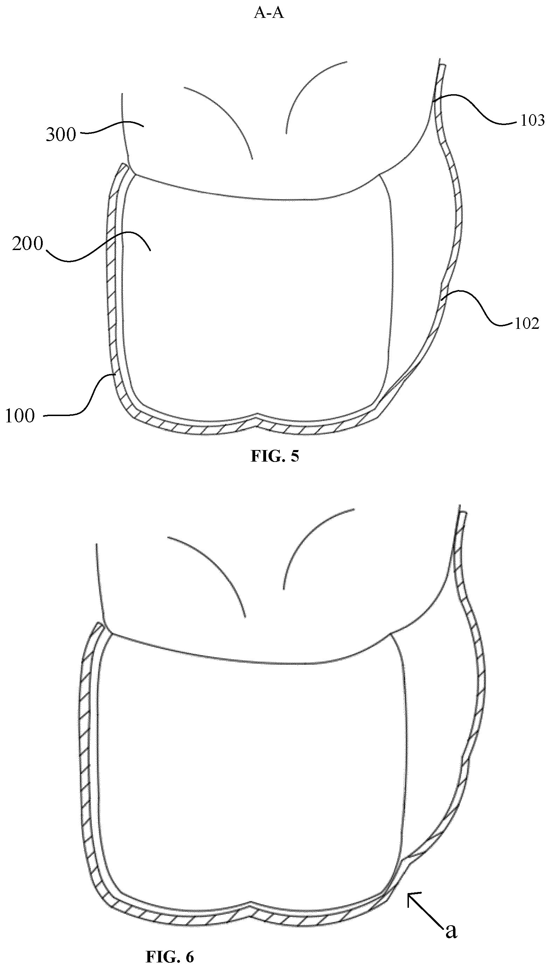

Referring to FIG. 5, the shell-shaped body 100 and the screen block 101 are integrally formed, and a surface of the blocking portion 102 adjacent to the buccal muscle can be set as a smooth curved surface, so that the patient may not have a strong sense of foreign objects after wearing, thereby improving the comfort of the patient. In this embodiment, the control ability of the respective tooth receiving cavity provided with the respective blocking portion 102 to the corresponding tooth is not strong, i.e., the orthodontic of the respective tooth receiving cavity provided with the respective blocking portion 102 to the corresponding tooth is not good. However, during manufacturing, especially during manufacturing of the shell-shaped body 100 using the hot-pressed film technology, the respective tooth receiving cavity with the respective blocking portion 102 is easy to be processed and is easy to demold. As illustrated in the shell-shaped dental instrument in FIG. 6, in order to enhance the control ability of the tooth receiving cavity or the shell-shaped dental instrument to the corresponding tooth in embodiments of FIG. 5, the respective blocking portion 102 may be in contact with a dental crown region *a* (a region pointed by the arrow in FIG. 6) of the corresponding tooth adjacent to the respective blocking portion 102, to increase an area of the dental crown of the corresponding tooth wrapped by the respective tooth receiving cavity, thereby increasing the control ability of the respective tooth receiving cavity or the shell-shaped dental instrument to the corresponding tooth while maintaining the blocking of the blocking portion 102 on the buccal muscle.

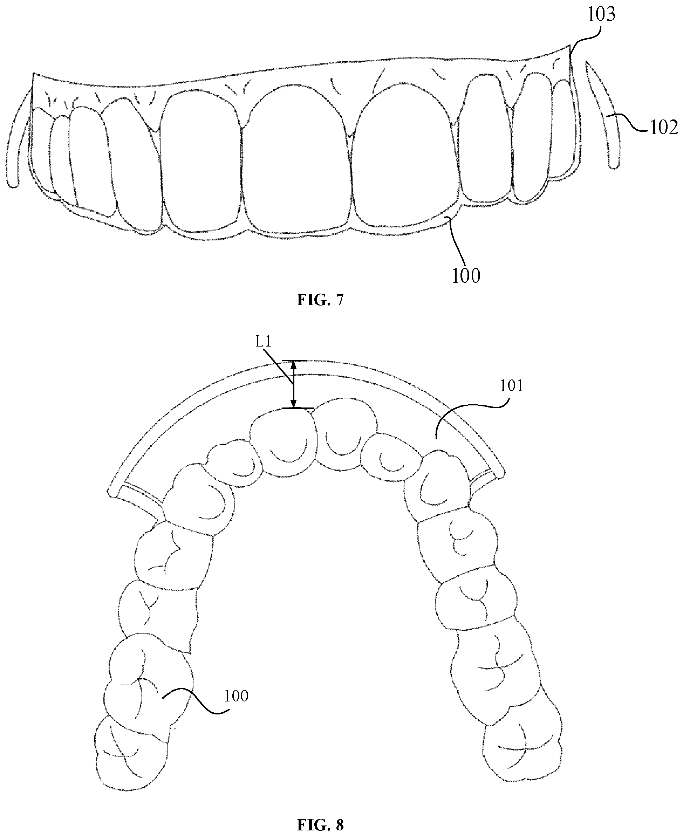

In other embodiments, as shown with reference to FIG. 7, the blocking portion 102 is protruded in the direction away from the teeth and disposed on gingiva corresponding to at least one of the labial side and the buccal side of the shell-shaped body 100, and covers a surface of each of at least one tooth receiving cavity adjacent to at least one of the labial muscle and the buccal muscle and a portion of a surface of the gingiva. Compared with the structure in which the blocking portion 102 is formed by being directly protruded from the at least one tooth receiving cavity in the direction away from the corresponding tooth, in the structure illustrated in FIG. 7, the tooth receiving cavity corresponding to the respective blocking portion 102 has a larger wrapping area for the corresponding tooth, the shell-shaped dental instrument has stronger control for the dentition, and the blocking portion 102 does not affect the orthodontic of the shell-shaped dental instrument to the corresponding tooth. The blocking portion 102 and the contact portion 103 may or may not be integrally formed. When the blocking portion 102 and the contact portion 103 are integrally formed, that is, the screen block and the shell-shaped body 100 are integrally formed. The blocking portion 102 is a bubble structure protruding in the direction away from the corresponding tooth. The bubble structure has a cross section in a shape of one of an ellipse, a water droplet, and a polygon, or any of combinations of two or more of the above shapes in a direction of a length axis of the corresponding tooth. In one embodiment, the cross section of the bubble in the direction of the length axis of the corresponding tooth have an elliptic shape, or is droplet-shaped, or is in a shape of a combination of the ellipse and the water droplet, and the smooth curved surface structure of the bubble can make the blocking portion 102 more fit with the labial muscle and/or the buccal muscle of the patient, thus reducing the discomfort of the patient. In addition, it is also possible to disperse a part of the pressure exerted by the labial muscle and/or the buccal muscle, so that the pressure exerted by at least one of the labial muscle and the buccal muscle on the blocking portion 102 is not excessively transmitted to the corresponding teeth.

There may be provided with a filler disposed inside the blocking portion 102, to enhance strength and/or rigidity of the blocking portion 102, to prevent the blocking portion 102 from being deformed due to excessive pressure exerted by the labial muscle and/or buccal muscle on the blocking portion 102, so that the blocking portion 102 may not contribute to isolating the labial muscle and/or buccal muscles and the corresponding teeth. In addition, by providing the filler, the strength of the blocking portion 102 may be further improved, so that the corresponding teeth have sufficient space for transverse or longitudinal growth. The filler may include a glass resin material conforming to oral medical standards.

In other embodiments, the blocking portion 102 and the contact portion 103 are individually formed, and the contact portion 103 and the shell-shaped body 100 are integrally formed. The blocking portion 102 can be fixed to the shell-shaped body 100 through any of bonding, riveting, and welding. In one example, the blocking portion 102 is fixed to the shell-shaped body 100 by using an adhesive, so that the manufacturing process is simpler and is beneficial to large-scale production. When the blocking portion 102 includes a material same as a material of the contact portion 103, rigidity of the blocking portion 102 can be increased by increasing the thickness of the blocking portion 102. When the material of the blocking portion 102 is not the same as that of the contact portion 103, the rigidity of the blocking portion 102 may be increased by selecting a material of which elastic modulus greater than that of the material of the contact portion 103, for example, the material of the blocking portion 102 is a metal, ceramic, or other polymer material.

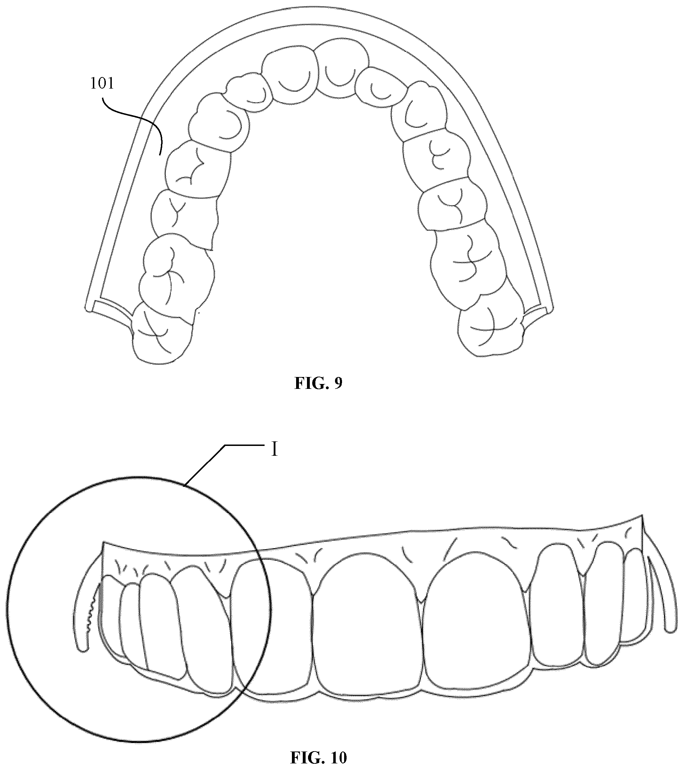

In other embodiments, as shown in FIG. 8, the screen block 101 provided on the labial side includes the blocking portion, and a maximum height L1 of the blocking portion being protruded in the direction away from the corresponding tooth is in a range of 3mm to 8mm. The blocking portion has a thickness in a range of 2.5mm to 3.0mm in the direction away from the corresponding tooth. A gap between an inner surface of the blocking portion adjacent to the outer surface of the corresponding tooth and the outer surface of the corresponding tooth is set to be at least 3.0mm, so as to reduce the inhibition of the labial muscle and/or the buccal muscle on the tooth growth. The screen block 101 has a length equal to a total width of 1 to 6 teeth or a total width of an entire dental arch in a dental arch direction. It is to be noted that the screen block 101 may also be provided on the labial side, the buccal side, or the labial-buccal side (referring to FIG. 9). When the screen block 101 is provided on the buccal side, the screen block 101 may be provided on both the two buccal sides or one of the two buccal sides. The screen block 101 provided on the labial side can eliminate part of the pressure of the labial on the jaw, and pull the local alveolar bone periosteum to stimulate deposition of the alveolar bone and the labial bone. In addition, providing the screen block 101 on the labial side and buccal side can also pull the periosteum at the vestibular sulcus and stimulate the growth and development of the corresponding alveolar bone.

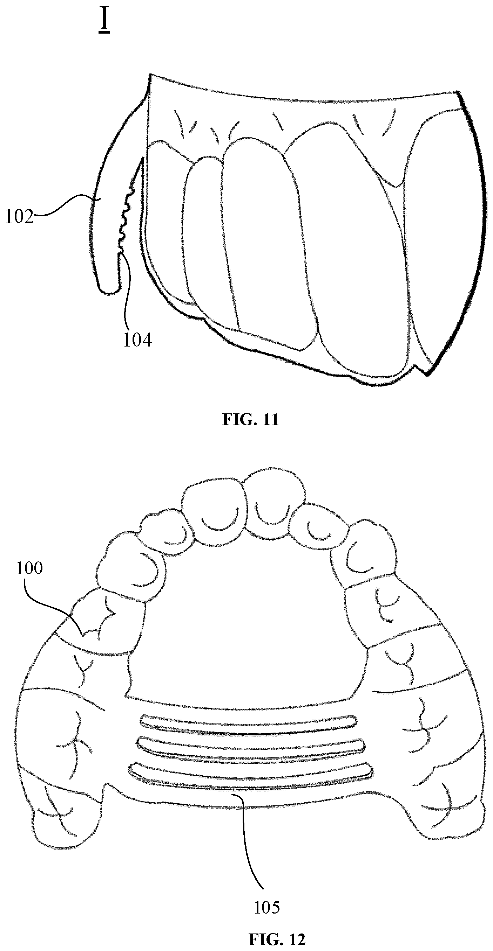

In other embodiments, the blocking portion 102 has a proximal tooth surface (a surface of the blocking portion 102 close to the corresponding tooth), a distal tooth surface (a surface of the blocking portion 102 away from the corresponding tooth), a mesial surface, and a distal surface, and each of at least one surface of the proximal surface, the distal surface, the mesial surface, and the distal surface is provided with at least one reinforcing member 104 for enhancing the rigidity of the blocking portion 102. In one example, any surface of the blocking portion 102 other than the distal tooth surface is provided with the at least one reinforcing member 104, to avoid contact between the at least one reinforcing member 104 and the labial muscle and/or the buccal muscle, to improve comfort the patient during wearing of the shell-shaped dental instrument. The at least one reinforcing member 104 may be provided in a gingival-jaw direction or in a mesial-distal direction. The at least one reinforcing member 104 and the blocking portion 102 are or are not integrally formed. When the at least one reinforcing member 104 and the blocking portion 102 are integrally formed, as shown in FIGS. 10 and 11, each reinforcing member 104 is a bubble structure of which a surface curvature exceeds a surface curvature of the blocking portion 102. The bubble structure is convex outwardly or concave inwardly. The strength of the blocking portion 102 can be enhanced by increasing a surface area of the blocking portion 102, to prevent the blocking portion 102 from being deformed under the pressure exerted by the labial muscle and/or the buccal muscle. The bubble structure may be a plurality of convex or concave circular structures or one or more convex or concave elliptical structures. The at least one reinforcing member may be one or more stiffening rib(s) attached to any one or more of the proximal tooth surface, the distal tooth surface, the mesial surface, and the distal surface, which can also enhance the rigidity of the blocking portion 102, and are not described herein.

In other embodiments, referring to the shell-shaped dental instrument in FIG. 12, the shell-shaped body 100 is further provided with an arch expanding device 105 cooperated with the at least one blocking portion 102. The arch expanding device 105 and the shell-shaped body 100 are integrally formed. One end of both ends of the arch expanding device 105 is connected to gingival margin or adjacent gingival margin of a lingual surface in a posterior tooth region on one side of the shell-shaped body 100, and the other end of the both ends of the arch expanding device 105 is connected to gingival margin or adjacent gingival margin of a lingual surface of a posterior tooth region on the other side of the shell-shaped body 100. Alternatively, the arch expanding device 105 and the shell-shaped body 100 are separately formed, and the arch expanding device 105 is detachably connected with the shell-shaped body 100. The arch expansion device 105 is generally applicable to a shell-shaped dental instrument worn on the upper jaw. By applying horizontal force to one or more teeth in the posterior tooth region to stretch the unclosed palatal suture, new bone deposition in the suture is stimulated, thereby stimulating jaw growth, increasing dental arch width, and improving dental arch shape. The screen block eliminates the reverse inhibition effect exerted by part of labial muscles and/or buccal muscles on corresponding teeth during arch expansion, thereby achieving better arch expansion effect. For shell-shaped arch expansion instruments without the screen block, the reverse inhibition of buccal muscles on corresponding teeth may affect the arc expansion, resulting in the insignificant effect of the arc expansion and failing to achieve the expected orthodontic effect. The shell-shaped dental instrument in the embodiment reduces the pressure exerted by the buccal muscle on the corresponding teeth by arranging the screen block on the shell-shaped appliance during the arc expansion, so that the expansion effect is obvious, which may be relatively meaningful.

Embodiments of the disclosure further provide a shell-shaped dental appliance set. The shell-shaped dental appliance set includes a first shell-shaped body and a second shell-shaped body. The first shell-shaped body is the shell-shaped dental instrument in any of the above embodiments. The second shell-shaped body is provided with a plurality of tooth receiving cavities, and the first shell-shaped body and the second shell-shaped body are cooperated with each other. The second shell-shaped body may also be the shell-shaped dental instrument in any of the above embodiments. Both the first shell-shaped body and the second shell-shaped body can be provided with screen blocks on the labial side, the buccal side, and/or the labial-buccal side. When the screen block provided on the first shell-shaped body is aligned with the screen block provided on the second shell-shaped body in the direction of the length axis of the corresponding tooth, both a length of the blocking portion on the first shell-shaped body and a length of the blocking portion on the second shell-shaped body in the direction of the length axis of the corresponding tooth do not exceed beyond a jaw plane, which can ensure that the blocking portion of the first shell-shaped body and the blocking portion of the second shell-shaped body do not interact with each other during cooperating of the first shell-shaped body and the second shell-shaped body, so as to improve the accuracy of correction.

## Claims

1. A shell-shaped dental instrument, comprising a shell-shaped body (100) having a plurality of tooth receiving cavities, and wherein the shell-shaped body (100) includes a screen block (101), and the screen block (101) includes:
a blocking portion (102) disposed on at least one of a labial side and a buccal side of the shell-shaped body (100) and being protruded in a direction away from teeth (200); and
a contact portion (103) connected with the blocking portion (102), wherein the blocking portion (102) is configured to be in contact with at least one of labial muscle and buccal muscle during wearing of the shell-shaped dental instrument, such that force exerted by at least one of the labial muscle and the buccal muscle on the blocking portion (102) is at least partially transmitted to gingiva (300) through the contact portion (103);
characterized therein that
the contact portion (103) has a structure configured to be in stable contact with the gingiva (300) during the wearing; and
a side surface of the contact portion (103) close to the gingiva (300) has a shape substantially consistent with a shape of the gingiva (300).

2. The shell-shaped dental instrument of claim 1, wherein each of at least one of the plurality of tooth receiving cavities has a geometric structure, and the geometric structure is configured to allow a respective received tooth (200) to be moved from a corresponding first position to a corresponding second position.

3. The shell-shaped dental instrument of claim 1, wherein
the blocking portion (102) is protruded from at least one of a labial side and a buccal side of at least one tooth receiving cavity of the plurality of tooth receiving cavities in the direction away from the teeth (200), and an inner surface of the blocking portion (102) is at least partially not in contact with an outer surface of at least one tooth (200) adjacent to the inner surface of the blocking portion (102) during the wearing; or
the blocking portion (102) is protruded in the direction away from the teeth (200) and disposed on gingiva (300) corresponding to at least one of the labial side and the buccal side of the shell-shaped body (100).

4. The shell-shaped dental instrument of claim 3, wherein the blocking portion (102) is a bubble structure protruding in the direction away from the teeth (200), in response to the blocking portion (102) and the contact portion (103) being integrally formed.

5. The shell-shaped dental instrument of claim 4, wherein the blocking portion (102) has a cross section in a shape of one of or a combination of two or more of an ellipse, a water droplet, and a polygon in a direction of a length axis of a corresponding tooth (200); and
wherein there is a filler disposed inside the blocking portion (102) for enhancing strength of the blocking portion (102).

6. The shell-shaped dental instrument of claim 3, wherein the blocking portion (102) is fixed on the shell-shaped body (100) through any of bonding, riveting, and welding, in response to the blocking portion (102) and the contact portion (103) being separately formed.

7. The shell-shaped dental instrument of claim 3, wherein the blocking portion (102) and the contact portion (103) are separately formed, and the blocking portion (102) has a thickness greater than a thickness of the contact portion (103) in response to a material of the blocking portion being the same as a material of the contact portion (103); or
wherein the blocking portion (102) and the contact portion (103) are separately formed, and the material of the blocking portion (102) has elastic modulus greater than that of the material of the contact portion (103) in response to the material of the blocking portion (102) being different from the material of the contact portion (103).

8. The shell-shaped dental instrument of claim 1, wherein a maximum height (L1) of the blocking portion (102) being protruded in the direction away from the teeth (200) is in a range of 3mm to 8mm, wherein the maximum height (L1) refers to a distance between an outer surface of a tooth receiving cavity of the plurality of tooth receiving cavities corresponding to the blocking portion (102) and an outer surface of the blocking portion away from the tooth receiving cavity in at least one of a labiolingual direction and a buccolingual direction.

9. The shell-shaped dental instrument of claim 1, wherein the blocking portion (102) has a length equal to a total width of 1 to 6 teeth (200) in a dental arch direction; or
wherein the blocking portion (102) has the length equal to a total width of an entire dental arch in the dental arch direction.

10. The shell-shaped dental instrument of claim 1, wherein the blocking portion (102) includes four surfaces of a proximal tooth surface, a distal tooth surface, a mesial surface, and a distal surface, and each of at least one surface of the four surfaces is provided with at least one reinforcing member (104).

11. The shell-shaped dental instrument of claim 10, wherein the at least one reinforcing member (104) and the blocking portion (102) are integrally formed, and each of the at least one reinforcing member (104) is a bubble structure of which a surface curvature greater than a surface curvature of the blocking portion (102); or
wherein the at least one reinforcing member (104) and the blocking portion (102) are separately formed, and the at least one reinforcing member (104) is fixed to the blocking portion (102).

12. The shell-shaped dental instrument of claim 1, wherein the shell-shaped body (100) further includes an arch expanding device (105) cooperated with the blocking portion (102), and wherein the arch expanding device (105) and the shell-shaped body (100) are integrally formed, and wherein one end of both ends of the arch expanding device (105) is connected to a gingival margin or an adjacent gingival margin of a lingual surface in a posterior tooth region on one side of the shell-shaped body (100), and another end of the both ends of the arch expanding device (105) is connected to a gingival margin or an adjacent gingival margin of a lingual surface in a posterior tooth region on another side of the shell-shaped body (100); or
wherein the shell-shaped body (100) further includes the arch expanding device (105) cooperated with the blocking portion (102), and wherein the arch expanding device (105) and the shell-shaped body (100) are separately formed, and the arch expanding device (105) is detachably connected with the shell-shaped body (100).

13. A shell-shaped dental appliance set, comprising a first shell-shaped body and a second shell-shaped body cooperated with the first shell-shaped body, and wherein each of the first shell-shaped body and the second shell-shaped body is the shell-shaped dental instrument of any of claims 1 to 12.

14. The shell-shaped dental appliance set of claim 13, wherein in response to the screen block (101) provided on the first shell-shaped body being aligned with the screen block (101) provided on the second shell-shaped body in a direction of a length axis of the teeth (200), each of a length of the blocking portion (102) on the first shell-shaped body and a length of the blocking portion (102) on the second shell-shaped body in the direction of the length axis of the teeth (200) does not exceed beyond a jaw plane.

## Patentansprüche

1. Schalenförmiges Dentalinstrument, das einen schalenförmigen Körper (100) umfasst, der eine Vielzahl von Zahnaufnahme-Hohlräumen aufweist, und wobei der schalenförmige Körper (100) einen Abschirmblock (101) umfasst und der Abschirmblock (101) umfasst:
einen Blockierabschnitt (102), der auf mindestens einem von einer labialen Seite und einer bukkalen Seite des schalenförmigen Körpers (100) angeordnet ist und in einer Richtung weg von den Zähnen (200) hervorsteht; und
einen Kontaktabschnitt (103), der mit dem Blockierabschnitt (102) verbunden ist, wobei der Blockierabschnitt (102) dazu ausgestaltet ist, während des Tragens des schalenförmigen Dentalinstruments derart mit mindestens einem von einem Labialmuskel und Bukkalmuskel in Kontakt zu stehen, dass Kraft, die von mindestens einem von dem Labialmuskel und dem Bukkalmuskel auf den Blockierabschnitt (102) ausgeübt wird, zumindest teilweise durch den Kontaktabschnitt (103) auf das Zahnfleisch (300) übertragen wird;
**dadurch gekennzeichnet, dass** der Kontaktabschnitt (103) eine Struktur aufweist, die dazu ausgestaltet ist, während des Tragens in stabilem Kontakt mit dem Zahnfleisch (300) zu stehen; und
eine Seitenoberfläche des Kontaktabschnitts (103) nahe am Zahnfleisch (300) eine Form aufweist, die im Wesentlichen mit der Form des Zahnfleisches (300) übereinstimmt.

2. Schalenförmiges Instrument nach Anspruch 1, wobei jeder von mindestens einem der Vielzahl von Zahnaufnahme-Hohlräumen eine geometrische Struktur aufweist, und die geometrische Struktur dazu ausgestaltet ist, das Bewegen eines entsprechenden aufgenommenen Zahns (200) von einer entsprechenden ersten Position zu einer entsprechenden zweiten Position zu erlauben.

3. Schalenförmiges Dentalinstrument nach Anspruch 1, wobei
der Blockierabschnitt (102) von mindestens einem von einer labialen Seite und einer bukkalen Seite mindestens eines Zahnaufnahme-Hohlraums der Vielzahl von Zahnaufnahme-Hohlräumen in der Richtung weg von den Zähnen (200) hervorsteht, und eine innere Oberfläche des Blockierabschnitts (102) während des Tragens zumindest teilweise nicht mit einer äußeren Oberfläche mindestens eines Zahns (200) benachbart zur inneren Oberfläche des Blockierabschnitts (102) in Kontakt steht; oder
der Blockierabschnitt (102) in der Richtung weg von den Zähnen (200) hervorsteht und auf dem Zahnfleisch (300) mindestens einer von der labialen Seite und der bukkalen Seite des schalenförmigen Körpers (100) entsprechend angeordnet ist.

4. Schalenförmiges Dentalinstrument nach Anspruch 3, wobei der Blockierabschnitt (102), wenn der Blockierabschnitt (102) und der Kontaktabschnitt (103) einteilig gebildet sind, eine Blasenstruktur ist, die in der Richtung weg von den Zähnen (200) hervorsteht.

5. Schalenförmiges Dentalinstrument nach Anspruch 4, wobei der Blockierabschnitt (102) in einer Richtung einer Längenachse eines entsprechenden Zahns (200) einen Querschnitt in einer Form von einem oder einer Kombination aus zwei oder mehr von einer Ellipse, einem Wassertropfen und einem Vieleck aufweist; und
wobei ein Füllstoff im Inneren des Blockierabschnitts (102) zum Verbessern der Festigkeit des Blockierabschnitts (102) angeordnet ist.

6. Schalenförmiges Dentalinstrument nach Anspruch 3, wobei der Blockierabschnitt (102), wenn der Blockierabschnitt (102) und der Kontaktabschnitt (103) getrennt gebildet sind, auf dem schalenförmigen Körper (100) durch ein beliebiges von Binden, Nieten und Schweißen befestigt ist.

7. Schalenförmiges Dentalinstrument nach Anspruch 3, wobei der Blockierabschnitt (102) und der Kontaktabschnitt (103) getrennt gebildet sind und der Blockierabschnitt (102) eine Dicke aufweist, die, wenn ein Material des Blockierabschnitts das gleiche wie ein Material des Kontaktabschnitts (103) ist, größer als eine Dicke des Kontaktabschnitts (103) ist; oder
wobei der Blockierabschnitt (102) und der Kontaktabschnitt (103) getrennt gebildet sind und das Material des Blockierabschnitts (102), wenn das Material des Blockierabschnitts (102) sich von dem Material des Kontaktabschnitts (103) unterscheidet, einen Elastizitätsmodul aufweist, der größer als derjenige des Materials des Kontaktabschnitts (103) ist.

8. Schalenförmiges Dentalinstrument nach Anspruch 1, wobei eine maximale Höhe (L1) des Blockierabschnitts (102), der in der Richtung weg von den Zähnen (200) hervorsteht, in einem Bereich zwischen 3 mm und 8 mm liegt, wobei die maximale Höhe (L1) einen Abstand zwischen einer äußeren Oberfläche eines Zahnaufnahme-Hohlraums der Vielzahl von Zahnaufnahme-Hohlräumen, der dem Blockierabschnitt (102) entspricht, und einer äußeren Oberfläche des Blockierabschnitts weg von dem Zahnaufnahme-Hohlraum in mindestens einer von einer labiolingualen Richtung und einer bukkolingualen Richtung bezeichnet.

9. Schalenförmiges Dentalinstrument nach Anspruch 1, wobei der Blockierabschnitt (102) in einer Zahnbogenrichtung eine Länge gleich einer Gesamtbreite von 1 bis 6 Zähnen (200) aufweist; oder
wobei der Blockierabschnitt (102) die Länge gleich einer Gesamtbreite eines gesamten Zahnbogens in der Zahnbogenrichtung aufweist.

10. Schalenförmiges Dentalinstrument nach Anspruch 1, wobei der Blockierabschnitt (102) vier Oberflächen, eine proximale Zahnoberfläche, eine distale Zahnoberfläche, eine mesiale Oberfläche und eine distale Oberfläche, umfasst und jede von mindestens einer Oberfläche der vier Oberflächen mit mindestens einem Verstärkungselement (104) versehen ist.

11. Schalenförmiges Dentalinstrument nach Anspruch 10, wobei das mindestens eine Verstärkungselement (104) und der Blockierabschnitt (102) einteilig gebildet sind und jedes von dem mindestens einen Verstärkungselement (104) eine Blasenstruktur ist, von der eine Oberflächenkrümmung größer als eine Oberflächenkrümmung des Blockierabschnitts (102) ist; oder
wobei das mindestens eine Verstärkungselement (104) und der Blockierabschnitt (102) getrennt gebildet sind und das mindestens eine Verstärkungselement (104) an dem Blockierabschnitt (102) befestigt ist.

12. Schalenförmiges Dentalinstrument nach Anspruch 1, wobei der schalenförmige Körper (100) ferner eine Bogenerweiterungsvorrichtung (105) umfasst, die mit dem Blockierabschnitt (102) zusammenwirkt, und wobei die Bogenerweiterungsvorrichtung (105) und der schalenförmige Körper (100) einteilig gebildet sind, und wobei ein Ende von beiden Enden der Bogenerweiterungsvorrichtung (105) mit einem Zahnfleischrand oder einem benachbarten Zahnfleischrand einer lingualen Oberfläche in einer hinteren Zahnregion auf einer Seite des schalenförmigen Körpers (100) verbunden ist, und ein anderes Ende der beiden Enden der Bogenerweiterungsvorrichtung (105) mit einem Zahnfleischrand oder einem benachbarten Zahnfleischrand einer lingualen Oberfläche in einer hinteren Zahnregion auf einer anderen Seite des schalenförmigen Körpers (100) verbunden ist; oder
wobei der schalenförmige Körper (100) ferner die Bogenerweiterungsvorrichtung (105) umfasst, die mit dem Blockierabschnitt (102) zusammenwirkt, und wobei die Bogenerweiterungsvorrichtung (105) und der schalenförmige Körper (100) getrennt gebildet sind, und die Bogenerweiterungsvorrichtung (105) abnehmbar mit dem schalenförmigen Körper (100) verbunden ist.

13. Schalenförmiges Dentalgeräteset, das einen ersten schalenförmigen Körper und einen zweiten schalenförmigen Körper umfasst, der mit dem ersten schalenförmigen Körper zusammenwirkt, und wobei jeder von dem ersten schalenförmigen Körper und dem zweiten schalenförmigen Körper das schalenförmige Dentalinstrument nach einem der Ansprüche 1 bis 12 ist.

14. Schalenförmiges Dentalgeräteset nach Anspruch 13, wobei dadurch, dass der Abschirmblock (101) der auf dem ersten schalenförmigen Körper bereitgestellt ist, mit dem Abschirmblock (101), der auf dem zweiten schalenförmigen Körper bereitgestellt ist, in einer Richtung einer Längenachse des Zahns (200) ausgerichtet ist, jede von einer Länge des Blockierabschnitts (102) auf dem ersten schalenförmigen Körper und einer Länge des Blockierabschnitts (102) auf dem zweiten schalenförmigen Körper in der Richtung der Längenachse der Zähne (200) nicht über eine Kieferebene hinausgeht.

## Revendications

1. Instrument dentaire en forme de coquille, comprenant un corps en forme de coquille (100) ayant une pluralité de cavités de réception de dent, et dans lequel le corps en forme de coquille (100) comprend un bloc écran (101), et le bloc écran (101) comprend :
une partie de blocage (102) disposée sur au moins l'un parmi un côté labial et un côté buccal du corps en forme de coquille (100) et faisant saillie dans une direction opposée aux dents (200) ; et
une partie de contact (103) raccordée avec la partie de blocage (102), dans lequel la partie de blocage (102) est configurée pour être en contact avec au moins l'un parmi un muscle labial et un muscle buccal pendant le port de l'instrument dentaire en forme de coquille, de sorte que la force exercée par au moins l'un parmi le muscle labial et le muscle buccal sur la partie de blocage (102) est au moins partiellement transmise à la gencive (300) par le biais de la partie de contact (103) ;
**caractérisé en ce que** :
la partie de contact (103) a une structure configurée pour être en contact stable avec la gencive (300) pendant le port ; et
une surface latérale de la partie de contact (103) à proximité de la gencive (300) a une forme sensiblement compatible avec une forme de la gencive (300).

2. Instrument dentaire en forme de coquille selon la revendication 1, dans lequel chacune d'au moins l'une de la pluralité de cavités de réception de dent a une structure géométrique, et la structure géométrique est configurée pour permettre de déplacer une dent reçue (200) respective d'une première position correspondante à une seconde position correspondante.

3. Instrument dentaire en forme de coquille selon la revendication 1, dans lequel :
la partie de blocage (102) fait saillie d'au moins l'un parmi un côté labial et un côté buccal d'au moins une cavité de réception de dent de la pluralité de cavités de réception de dent dans la direction opposée aux dents (200) et une surface interne de la partie de blocage (102) n'est au moins partiellement pas en contact avec une surface externe d'au moins une dent (200) adjacente à la surface interne de la partie de blocage (102) pendant le port ; ou bien
la partie de blocage (102) fait saillie dans la direction opposée aux dents (200) et disposée sur la gencive (300) correspondant à au moins l'un parmi le côté labial et le côté buccal du corps en forme de coquille (100).

4. Instrument dentaire en forme de coquille selon la revendication 3, dans lequel la partie de blocage (102) est une structure de bulle faisant saillie dans la direction opposée aux dents (200), en réponse à la partie de blocage (102) et à la partie de contact (103) qui sont formées de manière solidaire.

5. Instrument dentaire en forme de coquille selon la revendication 4, dans lequel la partie de blocage (102) a une section transversale dans une forme de l'un ou d'une combinaison de deux ou plus parmi une ellipse, une goutte d'eau et un polygone dans une direction d'un axe de longueur d'une dent (200) correspondante ; et
dans lequel il y a une matière de remplissage disposée à l'intérieur de la partie de blocage (102) pour améliorer la résistance de la partie de blocage (102).

6. Instrument dentaire en forme de coquille selon la revendication 3, dans lequel la partie de blocage (102) est fixé sur le corps en forme de coquille (100) par le biais de l'un quelconque parmi la liaison, le rivetage et le soudage, en réponse à la partie de blocage (102) et à la partie de contact (103) qui sont formées séparément.

7. Instrument dentaire en forme de coquille selon la revendication 3, dans lequel la partie de blocage (102) et la partie de contact (103) sont formées séparément, et la partie de blocage (102) a une épaisseur supérieure à une épaisseur de la partie de contact (103) en réponse à un matériau de la partie de blocage qui est identique à un matériau de la partie de contact (103) ; ou bien
dans lequel la partie de blocage (102) et la partie de contact (103) sont formées séparément, et le matériau de la partie de blocage (102) a un module d'élasticité supérieur à celui du matériau de la partie de contact (103) en réponse au matériau de la partie de blocage (102) qui est différent du matériau de la partie de contact (103).

8. Instrument dentaire en forme de coquille selon la revendication 1, dans lequel une hauteur maximum (L1) de la partie de blocage (102) qui fait saillie dans la direction opposée aux dents (200) est dans une plage de 3 mm à 8 mm, dans lequel la hauteur maximum (L1) fait référence à une distance entre une surface externe d'une cavité de réception de dent de la pluralité de cavités de réception de dent correspondant à la partie de blocage (102) et une surface externe de la partie de blocage à l'opposé de la cavité de réception de dent dans au moins l'une parmi une direction labiolinguale et une direction bucco-linguale.

9. Instrument dentaire en forme de coquille selon la revendication 1, dans lequel la partie de blocage (102) a une longueur égale à une largeur totale de 1 à 6 dents (200) dans une direction d'arcade dentaire ; ou bien
dans lequel la partie de blocage (102) a la longueur égale à une largeur totale de toute une arcade dentaire dans la direction d'arcade dentaire.

10. Instrument dentaire en forme de coquille selon la revendication 1, dans lequel la partie de blocage (102) comprend quatre surfaces d'une surface de dent proximale, une surface de dent distale, une surface mésiale et une surface distale, et chacune d'au moins une surface des quatre surfaces est prévue avec au moins un élément de renforcement (104).

11. Instrument dentaire en forme de coquille selon la revendication 10, dans lequel le au moins un élément de renforcement (104) et la partie de blocage (102) sont formés, de manière solidaire, et chacun du au moins un élément de renforcement (104) est une structure de bulle dont une courbure de surface est supérieure à une courbure de surface de la partie de blocage (102) ; ou bien
dans lequel le au moins un élément de renforcement (104) et la partie de blocage (102) sont formés séparément, et le au moins un élément de renforcement (104) est fixé à la partie de blocage (102).

12. Instrument dentaire en forme de coquille selon la revendication 1, dans lequel le corps en forme de coquille (100) comprend en outre un dispositif d'expansion d'arcade (105) coopérant avec la partie de blocage (102), et dans lequel le dispositif d'expansion d'arcade (105) et le corps en forme de coquille (100) sont formés de manière solidaire, et dans lequel une extrémité des deux extrémités du dispositif d'expansion d'arcade (105) est raccordée à une marge gingivale ou à une marge gingivale adjacente d'une surface linguale dans une région de dent postérieure sur un côté du corps en forme de coquille (100) et une autre extrémité des deux extrémités du dispositif d'expansion d'arcade (105) est raccordée à une marge gingivale ou à une marge gingivale adjacente d'une surface linguale dans une région de dent postérieure sur un autre côté du corps en forme de coquille (100) ; ou bien
dans lequel le corps en forme de coquille (100) comprend en outre le dispositif d'expansion d'arcade (105) coopérant avec la partie de blocage (102), et dans lequel le dispositif d'expansion d'arcade (105) et le corps en forme de coquille (100) sont formés séparément, et le dispositif d'expansion d'arcade (105) est raccordé, de manière détachable, avec le corps en forme de coquille (100).

13. Ensemble d'appareils dentaires en forme de coquille, comprenant un premier corps en forme de coquille et un second corps en forme de coquille coopérant avec le premier corps en forme de coquille, et dans lequel chacun parmi le premier corps en forme de coquille et le second corps en forme de coquille est l'instrument dentaire en forme de coquille selon l'une quelconque des revendications 1 à 12.

14. Ensemble d'appareils dentaires en forme de coquille selon la revendication 13, dans lequel en réponse au bloc écran (101) prévu sur le premier corps en forme de coquille qui est aligné avec le bloc écran (101) prévu sur le second corps en forme de coquille dans une direction d'un axe de longueur des dents (200), chacune parmi une longueur de la partie de blocage (102) sur le premier corps en forme de coquille et une longueur de la partie de blocage (102) sur le second corps en forme de coquille dans la direction de l'axe de longueur des dents (200) ne dépasse pas au-delà d'un plan de mâchoire.
